Europäisches Patentamt

European Patent Office

Office européen des brevets

(11) Numéro de publication : **0 557 141 A1**

(19)

# (12) DEMANDE DE BREVET EUROPEEN

(21) Numéro de dépôt : **93400063.9**

(22) Date de dépôt : **13.01.93**

(51) Int. Cl.⁵ : **G02F 1/37**

(30) Priorité : **21.01.92 FR 9200583**

(43) Date de publication de la demande :
**25.08.93 Bulletin 93/34**

(84) Etats contractants désignés :
**DE GB IT**

(71) Demandeur : **THOMSON-CSF**
**51, Esplanade du Général de Gaulle**
**F-92800 Puteaux (FR)**

(72) Inventeur : **Delacourt, Dominique**
**THOMSON-CSF, SCPI, BP 329**
**F-92402 Courbevoie Cedex (FR)**
Inventeur : **Pocholle, Jean-Paul**
**THOMSON-CSF, SCPI, BP 329**
**F-92402 Courbevoie Cedex (FR)**
Inventeur : **Papuchon, Michel**
**THOMSON-CSF, SCPI, BP 329**
**F-92402 Courbevoie Cedex (FR)**

(74) Mandataire : **Guérin, Michel et al**
**THOMSON-CSF, SCPI, B.P. 329, 50, rue**
**Jean-Pierre Timbaud**
**F-92402 Courbevoie Cédex (FR)**

(54) **Doubleur de fréquence optique utilisant des structures quantiques semi-conductrices.**

(57)    L'invention concerne un doubleur de fréquence comprenant une structure semiconductrice à puits quantiques et un réseau de susceptibilité non linéaire d'ordre 2 permettant d'amplifier notablement le doublement de fréquence. Le réseau peut être inscrit optiquement ou électriquement au sein de la structure semiconductrice et présente un pas dans le plan de ladite structure. On utilise de préférence une commande optique obtenue par interférence de deux faisceaux optiques faisant des angles $\theta$ de part et d'autre de la normale au plan de couches de manière à definir un éclairement périodique dont l'interfrange, pour atteindre la condition de quasi accord de phase, est égale à 2 longueurs de cohérence.
    Application : Systèmes d'enregistrement ou de lecture optique.

FIG.5

EP 0 557 141 A1

EP 0 557 141 A1

L'invention concerne un doubleur de fréquence d'onde électromagnétique comprenant une structure semiconductrice puits quantiques capable d'amplifier les effets optiques non linéaires et notamment la génération de seconde harmonique.

Les doubleurs de fréquence peuvent avantageusement être utilisés dans les systèmes d'enregistrement et de lecture optiques ou tout autre domaine dans lequel on cherche à disposer de source de puissance à une longueur d'onde déterminée que les matériaux classiques employés ne peuvent générer. Cependant, le problème majeur des doubleurs de fréquence réside dans l'accord de phase à réaliser impérativement entre la polarisation créée par l'onde électromagnétique incidente et l'onde harmonique créée. En effet l'onde harmonique créée se propage dans un matériau avec un vecteur d'onde $k_{2\omega}$ tel que :

$$K_{2\omega} = 2\pi \eta_{2\omega}/\lambda_{2\omega} = 2 \times 2\pi \eta_{2\omega}/\lambda_{\omega}$$

où $\eta_{2\omega}$ est l'indice de réfraction du matériau à la fréquence $2\omega$, si $\omega$ est la fréquence de l'onde électromagnétique incidente qui se propage avec un vecteur $k_{\omega}$ tel que $k_{\omega} = 2\pi \eta_{\omega}/\lambda_{\omega}$.

$\eta_{\omega}$ étant l'indice de réfraction du matériau à la fréquence $\omega$.

Généralement $\eta_{\omega}$ est différent de $\eta_{2\omega}$ et le déphasage existant entre la polarisation créée par l'onde électromagnétique incidente et l'onde harmonique limite de façon rédhibitoire l'efficacité de conversion de la fréquence $\omega$ en $2\omega$. On appelle longueur de cohérence Lc, la longueur de matériau au bout de laquelle ce déphasage atteint $\pi$, Lc étant donc définie de la manière suivante: $Lc(k_{2\omega}-2k_{\omega}) = \pi$, soit encore $Lc = \lambda_{\omega}/4(\eta_{2\omega}-\eta_{\omega})$.

Une solution connue pour pallier ce problème consiste à utiliser une perturbation périodique avec un pas $\Lambda$ de manière à former par exemple un réseau d'indice ou un réseau de susceptibilité non linéaire d'ordre 2 notée $\chi^{(2)}$ responsable de la génération de seconde harmonique.

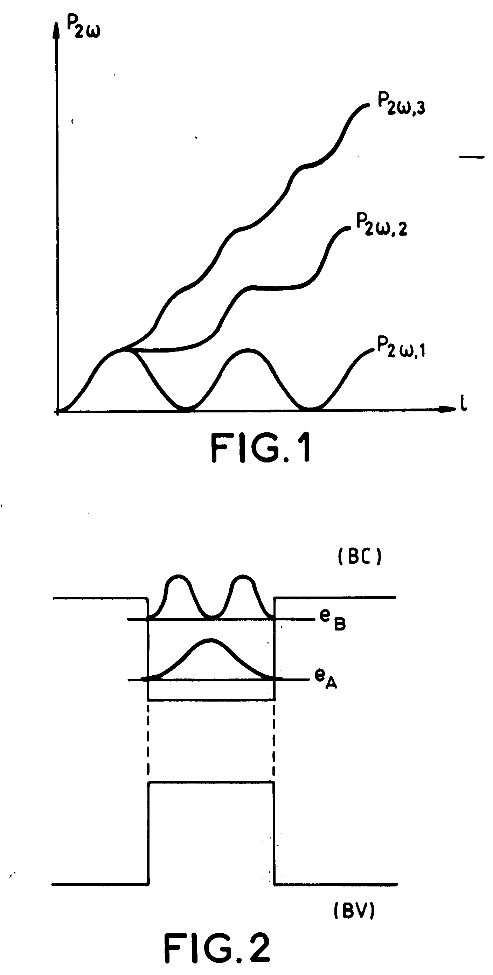

En choisissant astucieusement $\Lambda$ tel que $Lc = \dfrac{\Lambda}{2}$ on parvient à cumuler la puissance émise à la fréquence $2\omega$ au cours du chemin parcouru par l'onde électromagnétique incidente comme l'illustre la figure 1 représentant l'évolution de la puissance créée à la fréquence $2\omega$, en fonction de la longueur 1 parcourue au sein du doubleur. Sans réseau on obtient la courbe $P_{2\omega,1}$ en fonction de 1, en utilisant une structure réseau dans laquelle on crée périodiquement des domaines dans lesquels le coefficient $\chi^{(2)}$ n'est pas nul, séparés de domaines dans lesquels le coefficient $\chi^{(2)}$ est nul, on obtient la courbe $P_{2\omega,2}$. Enfin en créant un réseau de domaines $+ \chi^{(2)}$ séparés de domaines $-\chi^{(2)}$ on obtient la courbe $P_{2\omega,3}$ la plus performante.

Pour obtenir une efficacité élevée au sein d'un doubleur de fréquence l'invention propose d'utiliser une structure semiconductrice à puits quantique dont on sait qu'une telle structure permet d'amplifier fortement les effets optiques non linéaires, et d'inscrire dans cette structure un réseau de susceptibilité non linéaire d'ordre 2 afin de réaliser la condition de quasi accord de phase, ledit réseau étant commandable optiquement ou électriquement. Plus précisément, l'invention propose un doubleur de fréquence d'onde électromagnétique de longueur d'onde $\lambda_{\omega}$ comprenant une structure semiconductrice comportant un empilement de couches constituées de matériaux semiconducteurs permettant la création de puits de potentiel caractérisé en ce qu'il existe au moins deux niveaux discrets d'énergie $e_1$ et $e_2$ dans les puits tels que $e_1$ est inférieur à $e_2$, que la densité de probabilité de présence d'électrons sur $e_2$ est une fonction asymétrique et que ledit doubleur comprend un réseau de susceptibilité non linéaire d'ordre 2 résultant du peuplement en électrons du niveau $e_1$ et de cette asymétrie, le pas du réseau étant dans le plan des couches, ledit réseau étant commandable optiquement par un faisceau optique de longueur d'onde $\lambda p$ irradiant localement et périodiquement la structure semiconductrice de manière à peupler en électrons localement le niveau énergétique $e_1$ et ledit réseau permettant d'assurer l'accord de phase entre la polarisation créée par une onde électromagnétique incidente et une onde harmonique créée, les deux ondes se propageant dans le plan de la structure semiconductrice.

Le doubleur de fréquence selon l'invention peut avantageusement être obtenu à partir d'au moins un ensemble de couches de matériaux $M_I$, $M_{II}$, $M_{III}$ et $M_{IV}$ de manière à définir des puits quantiques asymétriques présentant deux largeurs centrales de bande interdite différentes, les puits ayant au moins deux niveaux discrets d'énergie $e_1$ et $e_2$. Le niveau électronique $e_1$ peut être peuplé optiquement sous l'action d'un faisceau optique de longueur d'onde $\lambda p$ telle que $hc/\lambda p$ est supérieure à $(e_1-h_1)$ ; h étant la constante de Planck et c la vitesse de la lumière. En utilisant deux faisceaux lumineux émettant à $\lambda p$ et faisant des angles $\theta$ de part et d'autre de la normale au plan des couches, on peut ainsi définir des franges d'interférences capables localement d'irradier ou non la structure semiconductrice de manière à peupler localement et périodiquement le niveau énergétique $e_1$. Sous l'incidence d'une onde électromagnétique de longueur d'onde $\lambda_{\omega}$, on crée ainsi de la génération de seconde harmonique dans les régions où le niveau $e_1$ est peuplé ; on définit alors optiquement un réseau de susceptibilité non linéaire d'ordre 2 dont le pas est ajustable en fonction de l'angle $2\theta$ entre les faisceaux incidents à la longueur d'onde $\lambda p$.

Dans un doubleur selon l'invention on peut également utiliser une structure semiconductrice comportant au moins un ensemble de couches de matériaux $M'_I$, $M'_{II}$, $M'_{III}$ et $M'_{IV}$ de manière à définir des puits quantiques présentant trois largeurs centrales de bande interdite $E'_{gI}$, $E'_{gII}$, $E'_{gIII}$, $E'_{gIV}$, $E'_{gII}$ et $E'_{gIV}$ étant égales et supé-

2

EP 0 557 141 A1

rieures à $E'_{gIII}$ et les puits quantiques étant rendus asymétriques par l'application d'un champ électrique perpendiculaire au plan des couches.

La présente invention sera mieux comprise et d'autres avantages apparaîtront à la lecture de la description qui va suivre et des figures annexées parmi lesquelles :

- la figure 1 illustre le comportement de la puissance créée à la fréquence $2\omega$ sous l'action d'une onde électromagnétique en fonction du chemin parcouru au sein de la structure doubleur de fréquuence :
  - . la courbe $P_{2\omega,1}$ représente l'évolution de la puissance $2\omega$ d'une structure sans réseau
  - . la courbe $P_{2\omega,2}$ représente l'évolution de la puissance $2\omega$ d'une structure comprenant des domaines $+ \chi^{(2)}$ séparés périodiquement par des domaines où la susceptibilité d'ordre 2 est nulle
  - . la courbe $P_{2\omega,3}$ représente l'évolution de la puissance $2\omega$ d'une structure comprenant des domaines $+ \chi^{(2)}$ séparés périodiquement par des domaines $- \chi^{(2)}$
- la figure 2 schématise un puits quantique à 2 niveaux énergétiques sur lesquels sont représentées les densités de probabilité de présence d'électrons;
- la figure 3 illustre un exemple de puits asymétrique avec les densités de probabilités de présence d'électrons sur les niveaux énergétiques au sein du puits, pouvant être réalisé dans une structure semiconductrice utilisée dans un doubleur de fréquence selon l'invention ;
- la figure 4 illustre un puits quantique asymétrique :
  - . la figure 4a : puits à 3 niveaux avec les transitions possibles
  - . figure 4b : puits à 2 niveaux avec les transitions possibles
- la figure 5 illustre un exemple de doubleur de fréquence selon l'invention utilisant une commande optique d'un réseau de susceptibilité non linéaire d'ordre 2 réalisé au sein d'une structure semiconductrice à puits quantique asymétriques ;
- la figure 6 illustre un exemple de structure semiconductrice utilisée dans un doubleur de fréquence selon l'invention, conçue autour des matériaux GaAs/GaAlAs;
- la figure 7 illustre un exemple de puits quantique symétrique pouvant être réalisé dans une structure semiconductrice utilisée dans un doubleur de fréquence selon l'invention
  - . la figure 7a montre la densité de probabilité de présence d'électrons sur les niveaux énergétiques au sein du puits en l'absence de champ électrique
  - . la figure 7b montre la densité de probabilité de présence d'électrons sur les niveaux énergétiques au sein du puits en présence d'un champ électrique.

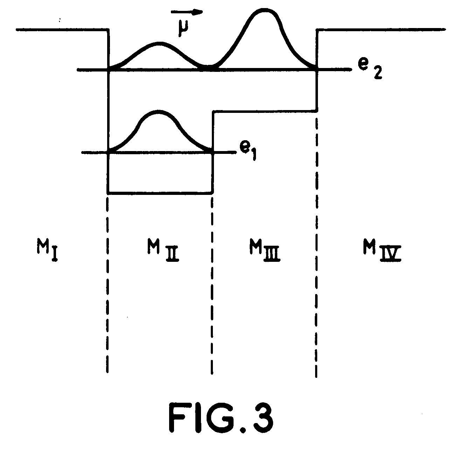

De façon générale, l'association d'au moins trois couches de matériaux semiconducteurs ayant des largeurs de bande interdite différentes permet la création d'un puits de potentiel pour les électrons dans la bande de conduction et pour les trous dans la bande de valence. Lorsque les dimensions de ce puits sont proches de longueurs d'ondes de Broglie associées à ces particules, l'énergie totale qui leur est permise ne peut prendre qu'un nombre fini de valeurs discrètes. Ce nombre de valeurs et ces valeurs sont directement fonction des dimensions des puits quantiques et des caractéristiques des matériaux semiconducteurs. Dans le cas d'un puits quantique obtenu par l'association de trois matériaux telle que ce puits présente deux niveaux discrets d'énergie $e_A$ et $e_B$ illustrés par la figure 2, il est possible sous l'action d'une onde électromagnétique de générer une transition du niveau $e_A$ au niveau $e_B$, les densités de probabilité de présence sur les niveaux $e_A$ et $e_B$ sont représentées sur cette figure ainsi que les bandes de conduction (BC) et de valence (BV) de la structure. Pour cela la longueur d'onde $\lambda_\omega$ de l'onde électromagnétique doit être telle que $(e_B-e_A)$ soit proche de $hc/\lambda_\omega$. Dans le cas d'une structure présentant un puits quantique symétrique tel que celui représenté à la figure 2, la densité de probabilité de présence d'un électron sur le niveau supérieur est une courbe symétrique qui ne présente pas de dipôle et donc de susceptibilité non linéaire d'ordre 2. Dans le cas d'une structure à puits quantique asymétrique telle que celle représentée à la figure 3 obtenue à partir de quatre matériaux $M_I$, $M_{II}$, $M_{III}$ et $M_{IV}$, la densité de probabilité de présence d'électrons sur le niveau énergétique $e_2$ est asymétrique et contribue à créer des dipôles $\mu$ responsables de la susceptibilité non linéaire d'ordre 2 qui se trouve alors nettement augmentée par rapport à celle créée au sein des matériaux $M_I$, $M_{II}$, $M_{III}$ et $M_{IV}$ lorsqu'ils sont sous leur forme "massive", c'est-à-dire dans une configuration qui ne permet pas l'observation des phénomènes quantiques évoqués ici.

Cette résonance de la susceptibilité non linéaire d'ordre 2 peut être mise à profit en particulier dans le domaine de la génération de seconde harmonique.

Pour cela on élabore de préférence une structure semiconductrice qui possède trois niveaux discrets d'énergie $e_1$, $e_2$ et $e_3$ dans la bande de conduction et trois niveaux discrets d'énergie $h_1$, $h_2$ et $h_3$ dans la bande de valence tels que :

$e_1 - h_1$ est compris entre $Eg_{II}$ et $Eg_{III}$

$e_2 - h_2$ est compris entre $E_{gIII}$ et $E_{gIV}$

$e_3 - h_3$ est compris entre $E_{gIII}$ et $E_{gIV}$ et tel que $(e_3-h_3) - (e_2 - h_2)$ est peu différent de $(e_2 - h_2) - (e_1 - h_1)$,

3

$E_{gII}$, $E_{gIII}$ et $E_{gIV}$ étant les trois largeurs de bande interdite du puits, une telle configuration est particulièrement favorable à l'émission d'une onde à la fréquence $2\omega$ sous l'action d'une onde électromagnétique à la fréquence $\omega$.

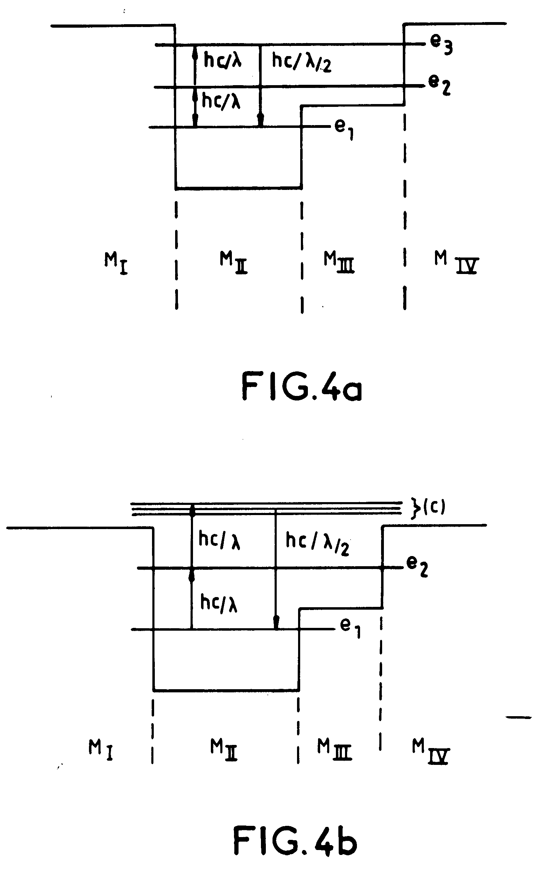

La figure 4a illustre les transitions permises avec une structure semiconductrice présentant trois niveaux discrets d'énergie. La figure 4b montre que les mêmes transitions sont possibles avec une structure à deux niveaux, le niveau $e_3$ discret et alors remplacé par un continuum d'états (C) dans la bande de conduction configuration moins favorable à la génération de seconde harmonique.

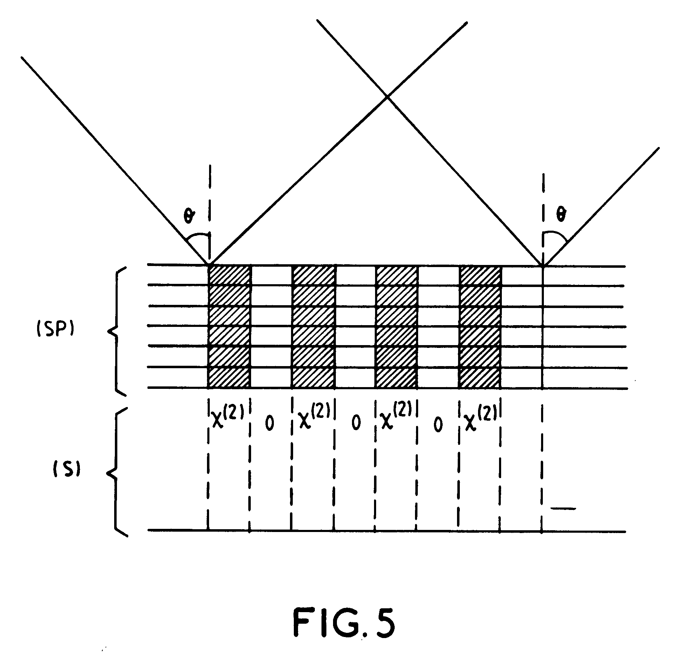

Le doubleur de fréquence selon l'invention utilise avantageusement ce type de structure semiconductrice conduisant à une augmentation de la valeur $\chi^{(2)}$ de la susceptibilité non linéaire d'ordre 2 qui est spatialement modulée pour obtenir l'accord de phase. Pour créer de la génération de seconde harmonique, il faut que les transitions inter sous bandes (entre $e_1$ et $e_2$) se produisent effectivement et donc que le niveau fondamental $e_1$ soit peuplé d'électrons. Si ce niveau $e_1$ n'est pas peuplé, aucune transition ne se produit et la valeur $\chi^{(2)}$ reste celle prise dans les matériaux lorsqu'ils sont sous leur forme "massive", c'est-à-dire beaucoup plus faible (environ trois ordres de grandeur de différence). Dans un doubleur de fréquence selon l'invention on propose de commander optiquement le peuplement en électrons de la bande de conduction et en trous de la bande de valence, en élairant avec une onde dont l'énergie photonique est suffisante pour susciter des transitions inter-bandes c'est-à-dire entre bande de valence et bande de conduction. Pour réaliser le réseau permettant l'accord de phase entre onde électromagnétique et onde harmonique, on utilise de préférence une commande optique obtenue par interférence de deux faisceaux optiques faisant des angles $\theta$ de part et d'autre de la normale au plan des couches de manière à définir périodiquement des zones dans lesquelles le niveau $e_1$ est peuple et des zones dans lesquelles le niveau $e_1$ n'est pas peuplé. On constitue ainsi le réseau de susceptibilité non linéaire d'ordre 2 au sein de la structure semiconductrice (SP) déposé sur un substrat S, dérit à la figure 5, qui utilise la juxtaposition de plusieurs puits asymétriques pour accroître davantage la conversion de fréquence. Les régions dans lesquelles les faisceaux optiques ont des interférences destructives ont des valeurs de $\chi^{(2)}$ très faibles devant celles des régions voisines et sont schématisés sur la figure 4 par des valeurs de $\chi^{(2)}$ proches de zéro. Ce type de commande optique est particulièrement intéressante dans la mesure où le contrôle de l'angle $\theta$ permet d'ajuster le pas du réseau à la longueur d'onde $\lambda_\omega$ de l'onde électromagnétique dont on cherche à doubler la fréquence. On dispose ainsi d'un doubleur de fréquence comprenant un réseau de susceptibilité non linéaire d'ordre 2 reconfigurable par commande optique.

A titre d'exemple la structure semiconductrice utilisé dans un doubleur de fréquence selon l'invention peut être conçue autour des matériaux GaAs/GaAlAs. Plus précisément les matériaux $M_I$, $M_{II}$, $M_{III}$ et $M_{IV}$ peuvent être les suivants :

$M_I$ :　　　$Ga_{0,6}Al_{0,4}As$

$M_{II}$ :　　　$GaAs$

$M_{III}$ :　　　$Ga_{0,6}Al_{0,1}As$

$M_{IV}$ :　　　$Ga_{0,6}Al_{0,4}As$

L'épaisseur de la couche de matériau $M_{II}$ étant de 59,4 Angstroems et l'épaisseur de la couche de matériau $M_{III}$ étant de 42,4 Angstroems.

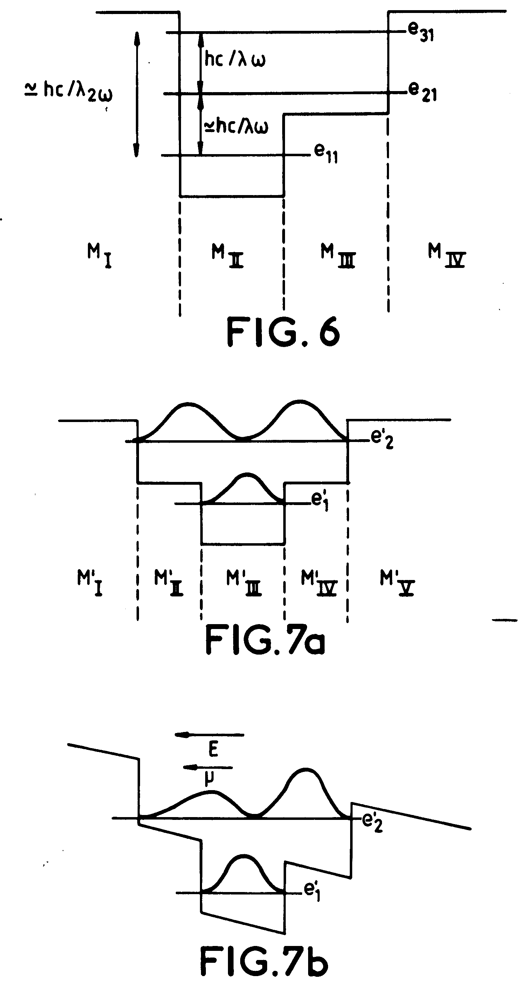

Dans une telle structure, il existe trois niveaux discrets d'énergie $e_{11}$, $e_{21}$ et $e_{31}$ dans la bande de conduction du puits. Cet exemple de structure est illustré par la figure 6.

Le puits quantique asymétrique de la structure est tel que le niveau $e_{11}$ ne soit pas préalablement peuplé afin de bien contrôler optiquement le peuplement du niveau $e_{11}$. Typiquement les écarts énergétiques sont les suivants:

$$e_{21} - e_{11} = 118,8 \text{ meV}$$
$$e_{31} - e_{21} = 114,7 \text{ meV}$$

Ainsi une telle structure est particulièrement bien adaptée au doublement de fréquence d'une onde électromagnétique de longueur d'onde $\lambda_\omega = 10,6$ µm. En effet dans ce cas $hc/\lambda_\omega$ est de l'ordre de 117 meV. Avec un pompage optique permettant une concentration de porteurs de $10^{17}$ électrons/cm³ on obtient une valeur de susceptibilité d'ordre 2 $\chi^{(2)}$ voisine de $2 \cdot 10^5$ pm/V (notons que dans GaAs sous sa forme "massive", la valeur de $\chi^{(2)}$ est de l'ordre de $4 \cdot 10 \cdot 10^2$ pm/V). Pour atteindre la condition de quasi accord de phase on cherche à obtenir un éclairement périodique dont l'interfrange est égale à 2 longueurs de cohérence. L'angle $\theta$ que font les deux faisceaux avec la normale au plan des couches doit alors vérifier la condition $\sin\theta = \lambda_p/4 \, Lc$ si $\lambda_p$ est la longueur d'onde de ces deux faisceaux. Dans le cadre des matériaux utilisés pour la structure semiconductrice choisie $\lambda_p$ est voisine de 0,84 µm. La longueur de cohérence étant de l'ordre de 100 µm on détermine ainsi un angle $\theta$ égal à 0,12°.

Les doubleurs de fréquence décrits précédemment utilisent avantageusement une structure semiconductrice à puits quantique asymétrique. L'invention propose également de faire du doublage de fréquence dans un puits symétrique. En effet une configuration symétrique peut être modifiée en puits asymétrique sous l'effet

4

d'un champ électrique. La figure 7 illustre un exemple de puits symétrique utilisant cinq matériaux différents $M'_I$, $M'_{II}$, $M'_{III}$, $M'_{IV}$ et $M'_V$. Sur la figure 7a les densités de probabilité de présence d'électrons sont représentées sur deux niveaux énergétiques discrets $e'_1$ et $e'_2$. Sur le niveau supérieur $e'_2$ la densité est une courbe symétrique. En présence d'un champ électrique E, il est possible de déformer l'allure du puits symétrique et de créer une asymétrie au niveau de la densité de probabilité de présence d'électrons sur le niveau $e'_2$ et ainsi générer un dipôle responsable de la génération de seconde harmonique. Suivant le sens du champ on est ainsi capable de créer des zones de susceptibilité non linéaire d'ordre 2 : $+ \chi^{(2)}$ et des zones de susceptibilité non linéaire d'ordre 2 : $-\chi^{(2)}$.

**Revendications**

1. Doubleur de fréquence d'onde électromagnétique de longueur d'onde $\lambda_\omega$ comprenant une structure semiconductrice comportant un empilement de couches constituées de matériaux semiconducteurs permettant la création de puits de potentiel caractérisé en ce qu'il existe au moins deux niveaux discrets d'énergie $e_1$ et $e_2$ dans les puits tels que $e_1$ est inférieur à $e_2$, que la densité de probabilité de présence d'électrons sur $e_2$ est une fonction asymétrique et que ledit doubleur comprend un réseau de susceptibilité non linéaire d'ordre 2 résultant du peuplement en électrons du niveau $e_1$ et de cette asymétrie, le pas du réseau étant dans le plan des couches, ledit réseau étant commandable optiquement par un faisceau optique de longueur d'onde $\lambda p$ irradiant localement et périodiquement la structure semiconductrice de manière à peupler en électrons localement le niveau énergétique $e_1$ et ledit réseau permettant d'assurer l'accord de phase entre la polarisation créée par une onde électromagnétique incidente et une onde harmonique créée, les deux ondes se propageant dans le plan de la structure semiconductrice.

2. Doubleur de fréquence selon la revendication 1, caractérisé en ce que la structure semiconductrice comporte au moins un ensemble de couches de matériaux $M_I$, $M_{II}$, $M_{III}$ et $M_{IV}$ de manière à définir des puits quantiques asymétriques présentant deux largeurs centrales de bande interdite différentes, le puits ayant au moins deux niveaux discrets d'énergie $e_1$ et $e_2$.

3. Doubleur de fréquence selon l'une des revendications 1 ou 2, caractérisé en ce que deux faisceaux optiques faisant des angles $\theta$ de part et d'autre de la normale au plan des couches, irradient l'ensemble de la structure et défissent des franges d'interférences capables de réaliser périodiquement des régions de susceptibilité non linéaire d'ordre 2 $\chi^{(2)}$ séparées par des régions de susceptibilité non linéaire d'ordre 2 beaucoup plus faible que $\chi^{(2)}$.

4. Doubleur de fréquence selon l'une des revendications 1 à 3, caractérisé en ce que $\lambda p$ est voisine de 0,8 µm.

5. Doubleur de fréquence selon l'une des revendications 1 à 4, caractérisé en ce que $\lambda_\omega$ est voisine de 10 µm.

6. Doubleur de fréquence selon la revendication 1, caractérisé en ce que la structure semiconductrice comporte au moins un ensemble de couches de matériaux $M'_I$, $M'_{II}$, $M'_{III}$, $M'_{IV}$ et $M'_V$ de manière à définir des puits quantiques présentant trois largeurs centrales de bande interdite $E'_{gII}$, $E'_{gIII}$, et $E'_{gIV}$, $E'_{gII}$ et $E'_{gIV}$ étant égales et supérieures à $E'_{gIII}$ et les puits quantiques étant rendus asymétriques par l'application d'un champ électrique perpendiculaire au plan des couches.

FIG.1

FIG.2

FIG.3

FIG.4a

FIG.4b

$\theta$

$\theta$

(SP)

(S)

$|\chi^{(2)}|$  0  $|\chi^{(2)}|$  0  $|\chi^{(2)}|$  0  $|\chi^{(2)}|$

# FIG. 5

**FIG. 6**

**FIG. 7a**

**FIG. 7b**

Office européen
des brevets

**RAPPORT DE RECHERCHE EUROPEENNE**

Numero de la demande

EP     93 40 0063
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PROC. PHYSICAL CONCEPTS OF MATERIALS FOR NOVEL OPTOELECTRONIC DEVICE APPLICATIONS I; SPIE VOL 1361 1990, pages 262 - 273 , XP000238902 J.S. HARRIS, JR. ET AL. 'Quantum wells and artificially structured materials for non-linear optics' * chapitres 3-4; figures 5,12 * --- | 1-2,5 | G02F1/37 |
| A | NONLINEAR OPTICS 1990 DIGEST, PAPER TP13 Juillet 1990, pages 113 - 114 , XP000203426 A. SA`AR ET AL. 'Infrared second harmonic generation by intersubband transitions in a AlGaAs/GaAs quantum well structures' * le document en entier * --- | 1-2,5 | |
| A | IEEE JOURNAL OF QUANTUM ELECTRONICS. vol. 25, no. 1, Janvier 1989, NEW YORK US pages 54 - 60 , XP000000617 Z. IKONIC ET AL. 'Resonant second harmonic generation by a semiconductor quantum well in electric field' * abrégé; chapitres I,III-IV * --- | 1,6 | |
| A | PHYSICAL REVIEW LETTERS vol. 62, no. 9, Février 1989, NEW YORK US pages 1041 - 1044 , XP000122650 M.M. FEJER ET AL. 'Observation of extremely large quadratic susceptibility at 9.6-10.8 microns in electric-field-biased AlGaAs quantum wells' * page 1041, colonne de gauche, alinéa 1 * * page 1044, colonne de gauche, alinéa 2 * --- | 1,6 | |

**DOMAINES TECHNIQUES RECHERCHES (Int. Cl.5)**

G02F

-/--

Le présent rapport a été établi pour toutes les revendications

| Lieu de la recherche | Date d'achèvement de la recherche | Examinateur |
|---|---|---|
| LA HAYE | 22 AVRIL 1993 | IASEVOLI R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

EPO FORM 1503 03.82 (P0402)

Office européen
des brevets

**RAPPORT DE RECHERCHE EUROPEENNE**

Numero de la demande

EP    93 40 0063
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-9 006 596 (THOMSON-CSF)<br>* page 4, ligne 19 – page 5, ligne 19 *<br>* page 7, ligne 28 – page 8, ligne 8 *<br>* page 9, ligne 27 – page 10, ligne 29 *<br>* revendications 1-3,10-11 *<br>* figures 2-3,7,10 *<br><br>----- | 1-2,5 | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 22 AVRIL 1993 | IASEVOLI R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)